# EUROPEAN PATENT APPLICATION

(11) **EP 0 891 737 A1**
(43) Date of publication of application: **20.01.1999**
(21) Application number: 97305203.8
(22) Date of filing: 14.07.1997
(51) Int. Cl.: A47J 37/12, A47J 45/10

(54) **Detachable basket handle**

(71) Applicant: Yahorng Electronic Co Ltd, Antin Shiang, Tainan (TW); Perry, Julie Elizabeth, Mount Tabor, Halifax HX2 0ZR (GB)
(72) Inventor: Huang, Chin-I, Antin Shiang, Tainan, R.O.C. (TW); Tsung, Wu Cheng, Antin Shiang, Tainan, R.O.C. (TW); Tien, Chiu San, Antin Shiang, Tainan, R.O.C. (TW)
(74) Representative: Wharton, Peter Robert

(57) **Abstract**

A basket and handle assembly (10) including a handle grip (12) at one end of which there is provided an engagement plate (16) extending generally downwardly from the handle grip, and releasable locking means (16a, 18a) for locking the engagement plate (16) and hence the handle (12) to the basket (11).

## Description

The present invention relates to a handle which may be attached to and detached from a basket, for example a cooking basket within a deep fryer.

According to a first aspect of the present invention there is provided a basket and handle assembly including a handle grip at one end of which there is provided an engagement plate extending generally downwardly from the handle grip, and releasable locking means for locking the engagement plate and hence the handle to the basket.

Preferably, the locking means operates automatically to lock the handle to the basket, whereupon it may only be unlocked by operating of a release catch on the handle.

Preferably, said locking means comprises a slotted bracket secured to the basket within which the plate may be inserted and retained therein by means of a retaining rod.

Conveniently, the rod extends generally downwardly along the plate, and has at the lower end thereof a cranked portion which normally protrudes generally perpendicularly to the plate but which can be rotated such that it lies substantially within or parallel to the plane of the plate.

The rod is preferably rotated by means of a spring loaded release catch disposed within the handle grip. The release catch is operatively connected to a cranked upper end of the rod such that pulling back the release catch against the action of the spring causes the rod to be rotated sufficiently to withdraw the cranked lower end of the rod into the plane of the plate, allowing the plate then to be withdrawn from the slotted bracket.

Preferably, the rod extends along the back surface of the plate, and the latter includes a slot through which the cranked lower end of the rod protrudes and is withdrawn during rotation. The plate also conveniently includes a pair of locating lugs which engage the top of the slotted bracket when the cranked lower end of the rod engages the bottom of the slotted bracket.

According to a second aspect of the present invention there is provided a handle for use with a basket, the handle including a handle grip at one end of which there is provided an engagement plate extending generally downwardly from the handle grip, and releasable locking means for locking the engagement plate and hence the handle to the basket.

An embodiment of the present invention will now be described, by way of example only, with reference to the accompanying drawings, in which:-
Figure 1 is a perspective view of the handle and basket assembly,

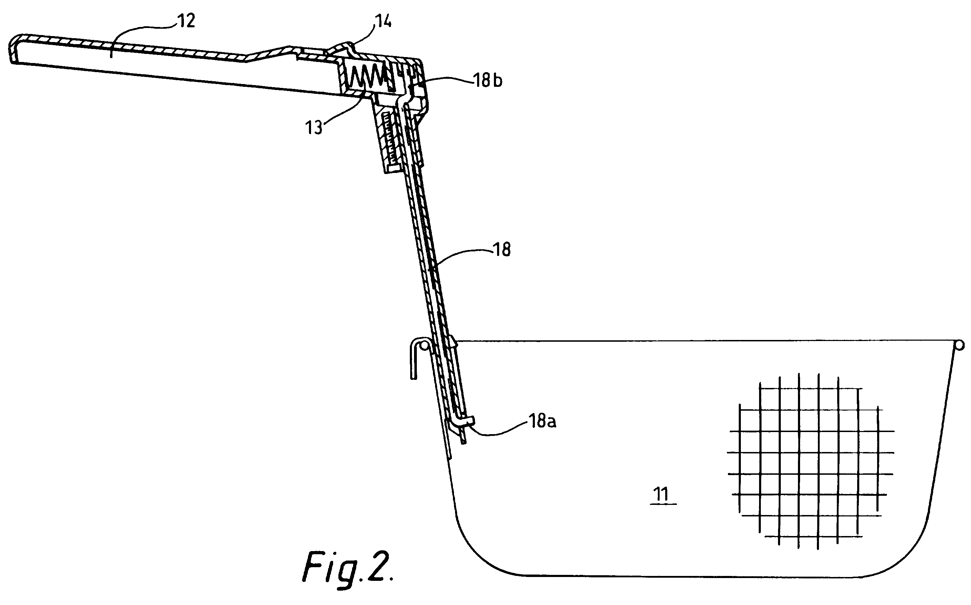

Figure 2 is a sectional side view of the assembly of Figure 1,

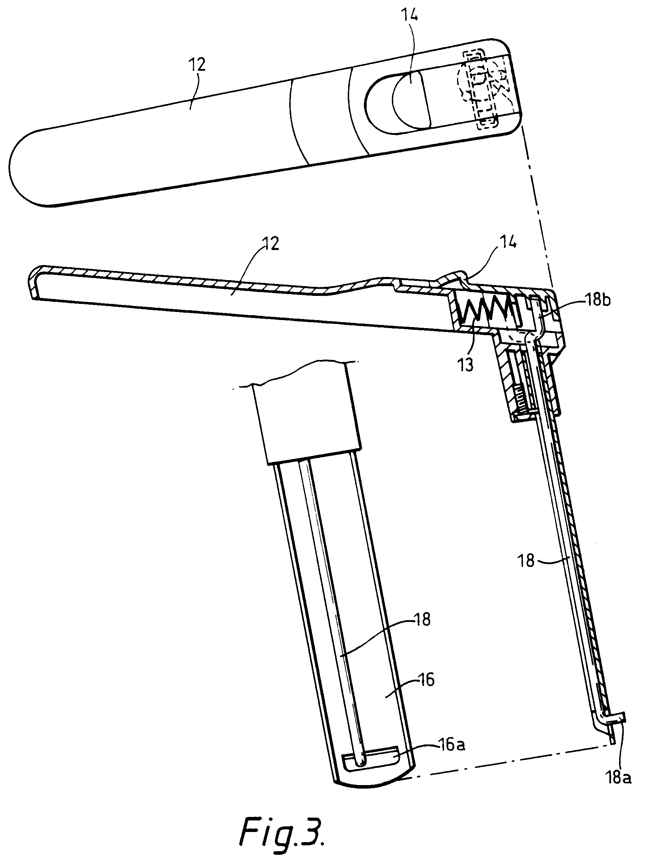

Figure 3 comprises plan, side and back views of the handle, and

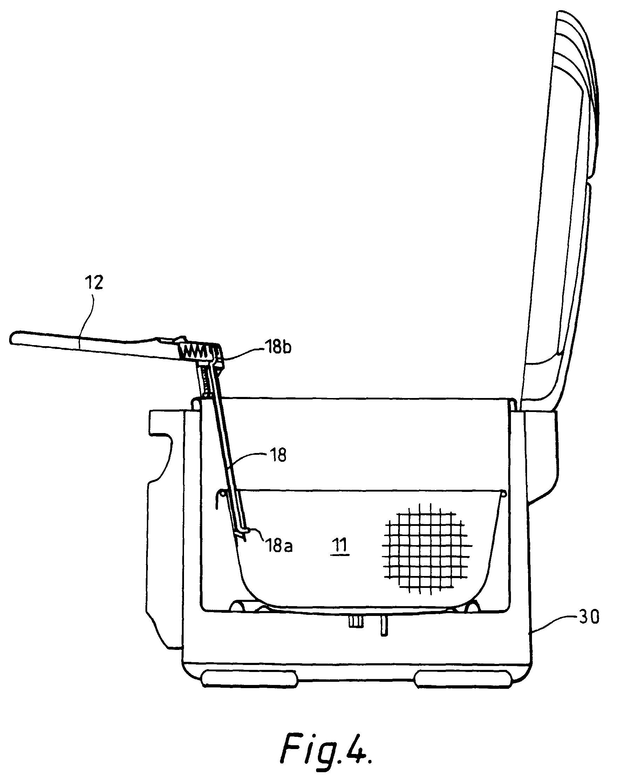

Figure 4 illustrates the basket in place within a deep fryer.

Referring to the drawings, a basket and handle assembly 10 according to the present invention comprises a handle grip 12 incorporating a thumb-operated release catch 14.

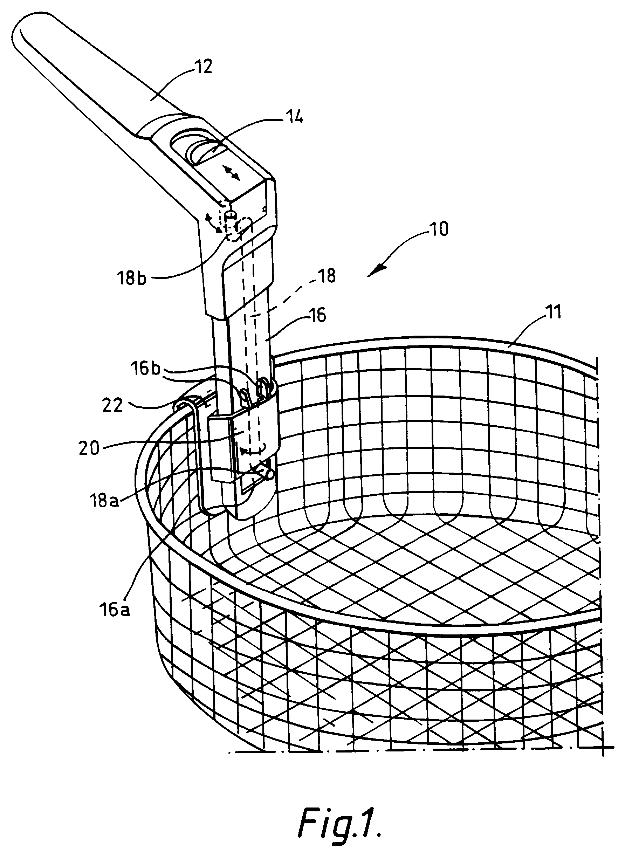

Extending generally downwardly from the grip 12 is an elongated engagement plate 16 which has a transverse slot 16a and a pair of locating lugs 16b. Running down the back surface of the plate 16 (as shown in broken lines in Figure 1) is a rod 18 which is cranked at both ends 18a, 18b (each of such ends being disposed generally perpendicularly to the other).

The lower cranked end 18a normally protrudes through the slot 16a but may be withdrawn therefrom by pulling back the release catch 14 against the action of spring 13, causing cranked end 18b also to be pulled backwards by virtue of the operative connection between the two, thus rotating the entire rod 18 such that end 18a no longer protrudes through the slot 16a but lies generally within it.

The cooperating part of the mechanism comprises a slotted bracket 20 which is secured to the wall of basket 11 by means of a fixed mounting 22.

As will be evident from the drawings, when it is desired to attach the handle to the basket, the plate 16 is inserted within the slotted bracket 20 which presses the protruding cranked end 18a sideways until lugs 16b hit the top of bracket 20 and the rod end 18a reaches slot 16a. Once released from the pressure of the bracket 20 on rod 18, the spring 13 urges the rod 18 to rotate back to the position shown in Figure 1, where the cranked end 18a protrudes through slot 16a to automatically lock the plate 16 and hence the handle 12 to the basket 11. With the handle so attached to the basket, the assembly is lowered into the cooking oil within the fryer 30, whereupon the handle is detached by pulling the release catch 14 backwards, hence rotating the rod and allowing the plate 16 to be withdrawn from slotted bracket 20.

The length of the rod 18 may vary according to the design of wire basket and/or fryer.

## Claims

1. A basket and handle assembly (10) including a handle grip (12) at one end of which there is provided an engagement plate (16) extending generally downwardly from the handle grip, and releasable locking means (16a, 18a) for locking the engagement plate (16) and hence the handle (12) to the basket (11).

2. A basket and handle assembly according to Claim 1, wherein the locking means (16a, 18a) operates automatically to lock the handle to the basket, whereupon it may only be unlocked by operating of a release catch (14) on the handle (12).

3. A basket and handle assembly according to Claim 1 or Claim 2, wherein said locking means comprises a slotted bracket (20) secured to the basket (11) within which the plate (16) may be inserted and retained therein by means of a retaining rod (18a).

4. A basket and handle assembly according to Claim 3, wherein the rod (18) extends generally downwardly along the plate (16), and has at the lower end thereof a cranked portion (18a) which normally protrudes generally perpendicularly to the plate but which can be rotated such that it lies substantially within or parallel to the plane of the plate.

5. A basket and handle assembly according to any of Claims 2 to 4, wherein the rod (18) is rotated by means of a spring loaded release catch (14) disposed within the handle grip (12), the release catch being operatively connected to a cranked upper end (18b) of the rod such that pulling back the release catch against the action of the spring (13) causes the rod to be rotated sufficiently to withdraw the cranked lower end (18a) of the rod into the plane of the plate, allowing the plate then to be withdrawn from the slotted bracket (20).

6. Apparatus according to any of Claims 3 to 5, wherein the rod (18) extends along the back surface of the plate (16), and the latter includes a slot (16a) through which the cranked lower end (18a) of the rod protrudes and is withdrawn during rotation.

7. Apparatus according to any of Claims 3 to 6 wherein the plate (16) also conveniently includes a pair of locating lugs (16b) which engage the top of the slotted bracket when the cranked lower end (18a) of the rod engages the bottom of the slotted bracket.

8. A handle (12) for use with a basket (11), the handle including a handle grip (12) at one end of which there is provided an engagement plate (16) extending generally downwardly from the handle grip, and releasable locking means (16a, 18a) for locking the handle to the basket.
